(19) Europäisches Patentamt
European Patent Office
Office européen des brevets

(11) **EP 3 052 218 B1**

(12) **FASCICULE DE BREVET EUROPEEN**

(45) Date de publication et mention de la délivrance du brevet:
**16.12.2020 Bulletin 2020/51**

(21) Numéro de dépôt: **14796213.8**

(22) Date de dépôt: **30.09.2014**

(51) Int Cl.:
**B01D 53/047** (2006.01)    **C01B 3/56** (2006.01)

(86) Numéro de dépôt international:
**PCT/FR2014/052458**

(87) Numéro de publication internationale:
**WO 2015/049452 (09.04.2015 Gazette 2015/14)**

(54) **PROCÉDÉ D'ADSORPTION À MODULATION DE PRESSION AVEC ÉLUTION SUPPLÉMENTAIRE**

DRUCKWECHSELADSORPTIONSVERFAHREN MIT ZUSÄTZLICHER ELUTION

PRESSURE SWING ADSORPTION METHOD WITH ADDITIONAL ELUTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2013 FR 1359624**

(43) Date de publication de la demande:
**10.08.2016 Bulletin 2016/32**

(73) Titulaire: **L'AIR LIQUIDE, SOCIÉTÉ ANONYME POUR L'ÉTUDE ET L'EXPLOITATION DES PROCÉDÉS GEORGES CLAUDE**
**75007 Paris (FR)**

(72) Inventeurs:
• **MONEREAU, Christian**
  **34000 Montpellier (FR)**
• **LEMAIRE, Yann-Pierrick**
  **91370 Verrières-le-Buisson (FR)**
• **RENOU, Elise**
  **94500 Champigny-sur-Marne (FR)**
• **TOULEMONDE, Louis**
  **59500 Douai (FR)**

(74) Mandataire: **Air Liquide**
**L'Air Liquide S.A.**
**Direction de la Propriété Intellectuelle**
**75, Quai d'Orsay**
**75321 Paris Cedex 07 (FR)**

(56) Documents cités:
**EP-A1- 0 884 088      EP-A2- 0 271 356**
**EP-A2- 0 988 882      EP-A2- 1 018 359**
**FR-A1- 2 892 322      US-A- 3 703 068**

**Description**

La présente invention concerne un procédé de traitement d'un gaz par adsorption, du type dans lequel on utilise une unité de traitement par adsorption à modulation de pression, couramment appelé unité PSA (pour « Pressure Swing Adsorption »), et dans lequel on régule ladite unité via le gaz d'élution.

Les unités PSA sont couramment utilisées pour la séparation et/ou la purification de gaz de charge, notamment dans les domaines de la production d'hydrogène et de dioxyde de carbone, du séchage, de la séparation des constituants de l'air, etc. Le document FR 2 892 322 A1 illustre cet état de la technique.

Les unités « PSA-H2 » qui produisent de l'hydrogène sensiblement pur sont utilisées avec des gaz de charge d'origine variée, formés par exemple de gaz issus de reformage à la vapeur, de raffinerie ou de four à coke, ou bien formés de gaz résiduaires d'unités de production d'éthylène ou de styrène, ou d'unités de séparation cryogénique hydrogène-monoxyde de carbone.

De manière générale, une unité PSA est constituée de plusieurs adsorbeurs qui suivent en décalage dans le temps un cycle de fonctionnement, par la suite appelé par commodité « cycle PSA » qui est réparti uniformément en autant de temps de phase qu'il y a d'adsorbeurs en fonctionnement, et qui est formé d'étapes de base, à savoir les étapes :

- d'adsorption à sensiblement une haute pression du cycle ;
- de dépressurisation à co-courant, généralement depuis la haute pression du cycle ;
- de dépressurisation à contre-courant, généralement depuis la basse pression du cycle ;
- d'élution à sensiblement une basse pression du cycle ; et
- de repressurisation, depuis la basse pression du cycle jusqu'à la haute pression du cycle. Par la suite, on s'intéresse au fonctionnement d'une unité PSA en régime établi, c'est-à-dire en dehors de périodes transitoires de démarrage ou d'arrêt de l'unité qui correspondent généralement à des cycles spéciaux élaborés à cet effet.

La contrainte principale de fonctionnement d'une unité PSA en régime établi consiste en le niveau de pureté du produit. Sous cette condition de fonctionnement, les performances de traitement d'une unité PSA sont alors généralement optimisées soit pour maximiser le rendement d'extraction (quantité de gaz produit/quantité de ce gaz présent dans le gaz de charge), soit pour minimiser l'énergie consommée.

On obtient de la sorte un cycle nominal de fonctionnement de l'unité PSA, déterminé directement en fonction des conditions nominales de fonctionnement (débit du gaz de charge, débit du gaz traité, composition du gaz de charge, température de fonctionnement de l'unité, ...)

Lorsque les conditions de fonctionnement ne s'écartent que de peu des conditions nominales, on a proposé par le passé de réguler le fonctionnement de l'unité PSA en ajustant un ou plusieurs paramètres du cycle nominal de façon à garantir que les performances de traitement restent supérieures à des limites minimales prédéfinies. Deux régulations qui relèvent de cette approche sont :

- la régulation « de capacité » qui consiste à modifier la durée du temps de phase du cycle en fonction de la variation du débit de gaz de charge ; et
- la régulation « sur le contrôle de pureté » qui consiste à modifier ce temps de phase en fonction de la pureté du gaz traité.

Il convient ici de définir ce qu'on entend par temps de cycle et temps de phase (ou plus simplement phase).

Comme on l'a décrit plus haut, un adsorbeur va donc commencer une période d'adsorption jusqu'à ce qu'il soit chargé dans le ou les constituants à arrêter à la pression haute puis va être régénéré par dépressurisation et extraction des composés adsorbés avant d'être remis en état pour recommencer une nouvelle période d'adsorption. L'adsorbeur a alors effectué un "cycle de pression" et le principe même du procédé PSA est d'enchaîner ces cycles les uns après les autres ; il s'agit donc d'un procédé cyclique. Le temps que met un adsorbeur pour revenir dans son état initial est appelé temps de cycle. Par principe, chaque adsorbeur suit le même cycle avec un décalage temporel qu'on appelle temps de phase ou plus simplement phase. On a donc la relation :

$$\text{Temps de phase} = \text{temps de cycle} / \text{Nombre d'adsorbeurs}$$ et on voit que le nombre de phases est égal au nombre d'adsorbeurs.

Le nombre N d'adsorbeurs peut être quelconque, mais généralement, N est compris entre 2 et 32, plus typiquement entre 4 et 16.

En fin de compte, en marche stabilisée, supposée ici à débit d'alimentation réduit, on obtient une production à la pureté requise et au rendement nominal du cycle utilisé.

Néanmoins, il n'en reste pas moins vrai que l'unité fonctionnant dans ces nouvelles conditions est surdimensionnée par rapport à un dimensionnement qui aurait effectué spécifiquement sur ce cas. L'amortissement de l'investissement de départ est ramené à une production d'hydrogène inférieur et le coût spécifique est donc supérieur. Sur de longues périodes d'exploitation de l'unité, ce fonctionnement est économiquement mauvais.

L'objet de l'invention est de tirer partie de ce surdimensionnement pour améliorer les conditions économiques de la production, en particulier en augmentant le rendement d'extraction c'est-à-dire en produisant plus d'hydrogène commercialisable si c'est le débit d'alimentation qui se trouve limité pour une quelconque raison ou en réduisant la quantité de gaz d'alimentation nécessaire et par là par exemple la quantité consommée de gaz naturel pour générer le syngas produit via un SMR, si la production est fixée.

Une solution de la présente invention est un procédé d'adsorption à modulation de pression (PSA) pour produire un flux gazeux enrichi en un composé X à partir d'un flux gazeux d'alimentation, mettant en œuvre au moins 2 adsorbeurs, chaque adsorbeur étant soumis à un cycle de pression présentant une pression haute et une pression basse et comprenant les étapes successives suivantes :

a) adsorption à la pression haute du cycle avec production du flux gazeux enrichi en composé X
b) dépressurisation jusqu'à la pression basse du cycle
c) élution à la pression basse au moyen d'un gaz d'élution
d) repressurisation jusqu'à la pression haute

caractérisé en ce que :

- le gaz d'élution comprend une fraction d'un flux gazeux issu de la dépressurisation d'un adsorbeur et une fraction du flux gazeux enrichi en composé X, et
- ladite fraction du flux gazeux enrichi en composé X est ajustable via des moyens de réglage.

Selon le cas, le procédé selon l'invention peut présenter une ou plusieurs des caractéristiques suivantes :

- la fraction du flux gazeux enrichi en composé X est ajustée en fonction d'au moins une des conditions opératoires du PSA ;
- les conditions opératoires comprennent le débit d'alimentation du PSA, la pression basse, la pression haute, la température du flux d'alimentation, la composition du flux gazeux d'alimentation et la concentration requise en composé X dans le flux gazeux enrichi, et le débit requis du flux gazeux enrichi en composé X ;
- le cycle de pression présente un temps de phase correspondant à la durée d'un cycle de pression divisé par le nombre d'adsorbeurs et la fraction du flux gazeux enrichi en composé X est déterminée en fonction du temps de phase ;
- le cycle de pression présente un temps de phase correspondant à la durée du cycle de pression divisé par le nombre d'adsorbeurs et la fraction du flux gazeux enrichi en composé X est choisie de manière à ce que le temps de phase corresponde au temps de phase nominal $\pm$ 5%, le temps phase nominal correspondant au temps de phase du PSA dans les conditions de dimensionnement ;
- les moyens de réglage comprennent une vanne automatique.
- la vanne automatique assure également une autre fonction dans le cycle PSA.
- le cycle de pression comprend de 1 à 6 équilibrages, de préférence de 2 à 5.
- l'étape b) de dépressurisation comprend plusieurs sous-étapes et le prélèvement de la fraction du flux gazeux issu de la dépressurisation est effectué simultanément ou au moins en partie avec une autre sous-étape ;
- le prélèvement de la fraction du flux gazeux enrichi en composé X est effectuée pendant toute la durée d'un temps de phase.
- le composé X est de l'hydrogène ou du CO2.

Les « conditions nominales » peuvent être définies comme l'ensemble des conditions fixées par le client qui déterminent le dimensionnement de l'unité et ses performances.

Pour un PSA H2 par exemple, on va retrouver la composition du gaz d'alimentation, la pureté requise pour l'H2, le débit de production, la pression du gaz d'alimentation, la pression de la production (ou la perte de charge maximale à travers l'unité), la pression minimale pour le gaz résiduaire. A ces paramètres principaux, peuvent se rajouter d'autres conditions qui vont conduire à éventuellement devoir surdimensionner certains équipements (fluctuation maximale de la composition du gaz de régénération pouvant déterminer la taille de la capacité de gaz résiduaire par exemple). A noter qu'un rendement minimum d'extraction en H2 peut faire partie des données de dimensionnement: il fixera alors le nombre minimum d'équilibrages à prévoir dans la détermination du cycle du PSA. Au lieu d'une composition précise du gaz d'alimentation, il peut être indiqué des plages de composition pour chaque constituant. C'est alors du ressort de la personne faisant le dimensionnement de déterminer la composition la plus contraignante pour le PSA. L'invention va être maintenant décrite plus en détail à partir des deux cas suivants, le premier correspondant à une unité PSA H2 standard quant au cycle et à la régulation de base, le second étant selon l'invention.

On choisit à titre d'exemple, et de façon se voulant non limitative, un cycle PSA 8.1.3, c'est-à-dire avec 8 adsorbeurs, un seul simultanément en production et 3 équilibrages de pression.

La représentation retenue ci-dessous consiste pendant le temps d'une phase à montrer la situation des 8 adsorbeurs.

Il est alors possible, si nécessaire, de construire le cycle complet en complétant chaque ligne par les étapes suivantes.

Tableau 1

| Ads | Ads | Ads |
|---|---|---|
| Ed1 | I | Ed2 |
| Ed3 (dp = 1 bar) | I | PP |
| PP | PP | BD |
| P | P | P |
| P | P | P |
| Eup3 | I | Eup2 |
| Eup1 + Rep | Rep | Rep |

En pratique, lorsqu'un adsorbeur a fini sa phase de production à la Pression Haute du cycle (Ads), il est dépressurisé via les équilibrages de pression Ed1 et Ed2 (séparés par un temps mort I), puis via un 3ème équilibrage Ed3, suivi d'un temps mort et d'une première étape d'alimentation purge (PP). La phase suivante consiste en 2 étapes complémentaires d'alimentation purge, de manière que du gaz d'élution soit produit sur la durée complète d'une phase et en l'étape de décompression à contre-courant. Les deux phases suivantes sont dédiées à l'étape d'élution. On notera qu'une seule phase d'élution suffirait à obtenir un cycle PSA qui fonctionne mais une durée trop courte pour l'élution et des pertes de charge plus élevées seraient néfastes aux performances du PSA. La phase suivante correspond aux équilibrages à pression montante Eup 3 et 2 et la dernière phase consiste en le dernier équilibrage Eup1 et en la repressurisation finale par la production (il est également possible de repressuriser via le gaz d'alimentation). On notera qu'on a choisi de repressuriser pendant toute la durée de la phase, donc simultanément avec le premier équilibrage, afin d'assurer un débit de production constant. Cela limite un peu le gaz récupéré lors du premier équilibrage (Ed1) et par là diminue légèrement le rendement d'extraction en H2.

On sait en effet que pour les PSA H2 au moins, augmenter le nombre d'équilibrages, à priori jusqu'à 4 ou 5 si les conditions de pression haute et basse le permettent comme c'est le cas habituellement pour les unités traitant un syngas issu par exemple d'une unité SMR aux environs de 25 à 30 bar abs et dont le gaz résiduaire est utilisé en basse pression (environ 1.3 bar abs) pour alimenter les brûleurs du SMR, permet d'augmenter le rendement d'extraction en H2. Ceci se fait au détriment de la productivité.

Ceci est d'ailleurs confirmé par la publication : « Parametric Study of a Pressure Swing Adsorption Process », AIChE 1999, Annual Meeting, Dallas, concernant la production d'hydrogène haute pureté à partir d'un gaz d'alimentation formé d'un mélange binaire méthane-hydrogène. Les cycles de pression utilisés sont similaires à ceux sus décrits. Il est indiqué que de passer de 1 à 3 équilibrages permet de gagner 2,5% sur le rendement mais au détriment d'une augmentation de 40% du volume d'adsorbant.

L'impact de la quantité de gaz d'élution, prélevé au cours des étapes d'alimentation purge (PP), sur les performances du procédé est également une donnée connue. A cet effet, il est classique d'utiliser le rapport d'élution P/F qui est le rapport (en mètres cube réels), c'est-à-dire dans les conditions opératoires de pression et température, de la quantité de gaz d'élution utilisée à la quantité de gaz d'alimentation entrée dans l'adsorbeur pendant le cycle. La Figure 2 de l'article AIChE susmentionné montre que l'optimum, quel que soit le cycle, est obtenu pour un rapport 1,1 à 1,2.

Dans tous les cas, le fait que le rapport P/F doive être supérieur à 1 n'est pas limité aux PSA H2. Ainsi, dans l'ouvrage « Pressure Swing Adsorption » de Ruthven, Farooq, Knaebel, ce point est abordé, par exemple au paragraphe « Purge flow rate, Air drying, PSA Processes » du Chapitre 6, où il est expliqué que pour une unité PSA sécheur d'air, un rapport P/F de 1,15 est recommandé. Un rapport de 1 permet en théorie de faire reculer le front d'impuretés jusque là où il se trouvait avant adsorption.

La détermination du rapport d'élution d'une unité industrielle ou pilote peut-être réalisée à partir de la mesure des débits d'alimentation et d'élution du gaz. Elle peut être déterminée également à partir de logiciel de simulation de procédé PSA à la manière de ce qui a été fait dans l'article AIChE.

Dans les PSA H2 récents, le gaz d'élution provient d'une ou d'étapes multiples d'alimentation-purge situées au cours de la décompression, plus particulièrement à co-courant. Si la production de gaz d'élution a souvent lieu après le dernier équilibrage et avant la décompression à contre-courant, comme dans notre exemple, il existe de très nombreuses variantes : étape simultanée avec un ou plusieurs équilibrages, étape intercalée entre 2 équilibrages successifs, simultanée avec le début de la décompression à contre-courant...

Sur les PSA plus anciens ou pour d'autres types de séparation, le gaz d'élution peut provenir de la production, voire dans quelques cas particuliers être un gaz extérieur à l'unité.

De façon générale, la phase d'élution consiste à faciliter la désorption des impuretés et nettoyer la zone côté production en "faisant reculer le front d'impuretés". Augmenter la quantité de gaz d'élution va permettre de mieux éliminer les impuretés et donc d'avoir besoin d'un volume d'adsorbant moindre mais c'est au détriment de la production car cela consomme du gaz le moins adsorbable.

En fonction des conditions opératoires et des conditions économiques, on va rechercher sur le cas nominal, à l'aide de tests ou de simulations, un optimum économique qui va correspondre, par exemple pour un PSA H2 à choisir le nombre d'adsorbeurs total, le nombre simultanément en adsorption, le nombre d'équilibrages, le rapport P/F et la nature du gaz d'élution.

Pour d'autres conditions de marche, par exemple à fonctionnement réduit, on utilise les régulations décrites plus haut qui consiste à modifier le temps de phase pour maintenir la pureté recherchée.

Selon l'invention, on va scinder systématiquement le gaz d'élution en au moins deux sources différentes. Une première partie viendra de la dépressurisation à co-courant de l'adsorbeur (PP) alors que la seconde partie (PProd) sera prélevée sur la production. Prélevant moins de gaz d'élution pendant la dépressurisation à co-courant compte tenu de l'élution par la production, on peut faire un équilibrage 3 plus poussé, c'est-à-dire en pratique garder la quantité de gaz équivalente dans le système, et de la sorte compenser la perte de production par une augmentation du rendement via les équilibrages.

On va retenir par exemple le cycle ci-dessous :

Tableau 2

| Ads | Ads | Ads |
|---|---|---|
| Ed1 | I | Ed2 |
| Ed3 | I | PP |
| PP | PP | BD |
| P(PP) | P(PP) | P(PP) |
| P(Prod) | P(Prod) | P(Prod) |
| Eup3 | I | Eup2 |
| Eup1 + Rep | Rep | Rep |

Au point de fonctionnement nominal, un tel cycle, même si pour les PSA H2 ce n'est pas un cycle standard, ne présente pas d'innovation particulière.

Par contre, cela permet de mettre en œuvre de façon simple une régulation d'un type nouveau qui permet de répondre au problème posé à savoir : tirer parti d'un fonctionnement à débit réduit (alimentation limitée en quantité ou demande plus faible de gaz produit) ou d'un point de fonctionnement plus favorable que le point de dimensionnement. Par point de fonctionnement plus favorable, on entend en particulier un paramètre qui va conduire à augmenter la productivité du PSA et qui, à débit constant va entraîner une augmentation du temps de cycle pour conserver la pureté de la production (et éviter une sur qualité du produit au détriment du rendement).

De façon générale, le temps de phase d'un PSA est régulé via une relation du type :

$$\text{Tph} = \text{TphN} * (\text{Dn}/\text{D}) * \text{K1} * \text{K2} * \text{K3} * \text{Ki} \ldots * \text{KM}$$

Avec

- Tph: temps de phase réel (pour la phase en cours)

- TphN : temps de phase nominal (dimensionnement)
- DN : débit d'alimentation nominal
- D : débit actuel
- K1 coefficient pureté H2
- K2 coefficient conditions opératoires
- K3 coefficient lié aux opérations périodiques amont ou aval
- Ki
- KM : coefficient opérateur

La première partie de la formule Tph = TphN *(Dn/ D) consiste à adapter le temps de phase au débit à traiter. Comme déjà dit, cela permet à l'adsorbant de traiter la même quantité de gaz d'alimentation durant chaque phase. On utilise généralement des Nm3 pour prendre en compte les débits via des débitmètres corrigés en pression, température et si nécessaire en masse volumique, cette dernière éventuellement déterminée par analyse.

Le coefficient K1 est le coefficient correcteur lié à la pureté. Il doit conduire à raccourcir le temps de phase en cas de risque de perte de la pureté et à le rallonger en cas de sur qualité. Comme pour tous les paramètres, il existe plusieurs manières d'intégrer la pureté de l'hydrogène dans le calcul du temps de phase. L'exemple ci-dessous en décrit une, de façon non limitative pour un seuil d'impureté acceptable (spec en pureté : 10 ppm).

Tableau 3

| Seuil de pureté | < 5 ppm | entre 5ppm et 8 ppm | entre 8 ppm et 10 ppm | entre 10 ppm et 11 ppm | < 11 ppm |
|---|---|---|---|---|---|
| K1 | 1,02 | 1,01 | 1,0 | 0,98 | 0,95 |

En pratique, il n'y a pas de correction entre 8 et 10 ppm d'impureté mesurés (K1=1.0). On corrige plus en cas de pollution (0.98 / 0.95) qu'en cas de sur pureté (1.01/1.02).

A cela, se rajoute éventuellement des temporisations correspondant par exemple à un temps complet de cycle.

La correction peut porter sur le temps de phase à venir ou éventuellement sur celui en cours si le procédé le permet.

Cette régulation peut être rendue inopérante par décision d'un opérateur, comme d'ailleurs la majorité des corrections.

Le coefficient K2 est lié à un paramètre opératoire du PSA mesuré de façon continu ou semi continu, susceptible de varier au cours du temps. Cela peut être, toujours par exemple non limitatif, la teneur en azote dans le gaz d'alimentation ou la basse pression de régénération. Par simulation, ou essais, on connait l'influence de ce paramètre sur les performances du PSA, en particulier sur la productivité et par là sur le temps de phase. Une telle correction permet d'adapter immédiatement le temps de phase aux nouvelles conditions opératoires sans attendre que la pureté de l'hydrogène ne varie, ce qui peut prendre un certain nombre de cycles. Même si la correction n'est pas parfaite, cela limite les variations de la pureté H2.

Le coefficient K3 s'il existe prend en compte le fonctionnement d'unités amont ou aval qui ont un impact sur le fonctionnement du PSA. Un exemple correspond au cas où le débit d'alimentation du PSA sert périodiquement à régénérer une autre unité de traitement de gaz par adsorption. A un moment donné et pour une période connue, le gaz de charge va voir sa composition changer, par exemple dans le cas d'un PSA H2 dont le débit d'alimentation sert à régénérer un sécheur de syngas, avoir une teneur en CO plus importante. Là encore, l'idée est de prendre les devants et de corriger immédiatement le temps de phase pendant un temps donné.

Enfin KM, est la correction opérateur. Elle est généralement utilisée après avoir mis hors service la régulation sur la pureté. Pour disposer d'une marge importante sur la pureté de la production pendant une période où l'on craint par exemple des perturbations, l'opérateur décide de raccourcir le temps de phase pour assurer la pureté même au détriment du rendement d'extraction.

Comme on le voit ce type de régulation, déjà élaboré, permet de maintenir à la fois la pureté requise et le rendement. Il conduit à adopter pour le PSA un temps de phase plus long que le temps de phase nominal dés lors que les conditions de fonctionnement sont plus favorables.

On notera également :

- Qu'il peut être possible si le dimensionnement le permet, de raccourcir le temps de phase pour pouvoir traiter plus de débit quitte à perdre un peu de rendement dans une telle marche.
- Que tous les paramètres et coefficients sont prévus pour rester dans des plages définies avec diverses alarmes et éventuellement mises en sécurité.

La régulation suivant l'invention quant à elle va permettre de tirer profit de l'écart en temps de phase recalculé et temps de phase nominal pour augmenter les performances du PSA, en particulier le rendement d'extraction.

Comme pour la régulation de base, il existe de multiples manières de mettre cette nouvelle régulation en œuvre. La façon la plus simple de l'illustrer est de repartir de la régulation classique décrite plus haut.

Supposons que le résultat du calcul conduise à Tph = 1.18 TphN.

Dans un tel cas, on va pouvoir réduire la quantité de gaz d'élution provenant de la production, ce qui va conduire à moins bien régénérer l'adsorbant et par là à diminuer la productivité.

Dans les mêmes conditions d'alimentation, il faudra donc accélérer le temps de phase pour compenser cette diminution provoquée de la productivité.

Par simulations ou par essais, il convient d'établir la relation entre productivité et quantité d'élution. En intégrant cette modification dans la boucle de régulation, on va pouvoir conserver un temps de phase égal ou proche de TphN même dans un cas de marche plus favorable et produire plus.

Cette régulation pourra jouer éventuellement jusqu'à supprimer totalement l'élution par la production. Au-delà, il convient d'en revenir à une régulation standard, c'est-à-dire augmenter le temps de phase.

En pratique, cela peut se traduire par exemple par l'addition de 2 tests : Tph > TphN et PProd > 0 avec, en cas de réponse positive une action sur la quantité de gaz d'élution du type : QPProd i+1 = f (Tph, QPProd i) modifiant automatiquement le débit d'élution ou directement l'ouverture de la vanne régulant le débit.

A côté de ce type de régulation où chaque facteur agit en quelque sorte de façon séparée et dans lequel la consigne finale est le résultat d'une multiplication de calculs et/ou corrections, il existe des régulations où la totalité des données sont traitées simultanément via un ou des algorithmes donnant en réponse les caractéristiques de la régulation (temps de phase, ouverture des vannes...).

L'invention est donc caractérisée par le fait que l'unité PSA comporte une étape d'élution en basse pression effectuée au moyen d'un gaz d'élution provenant pour partie d'au moins un adsorbeur en phase de dépressurisation à co-courant (étape d'alimentation purge -ou Purge Providing- standard) et pour une autre partie, de la production, cette deuxième quantité étant adaptée aux conditions opératoires afin d'optimiser le rendement d'extraction .

Plus particulièrement, la fraction d'élution venant de la production est adaptée en fonction des conditions opératoires afin de maintenir le temps de phase à sa valeur nominale ou proche de la valeur nominale. On revient ultérieurement sur ce qu'on entend par conditions opératoires.

Ce type de régulation s'applique à priori à tous types de PSA et plus particulièrement aux PSA H2.

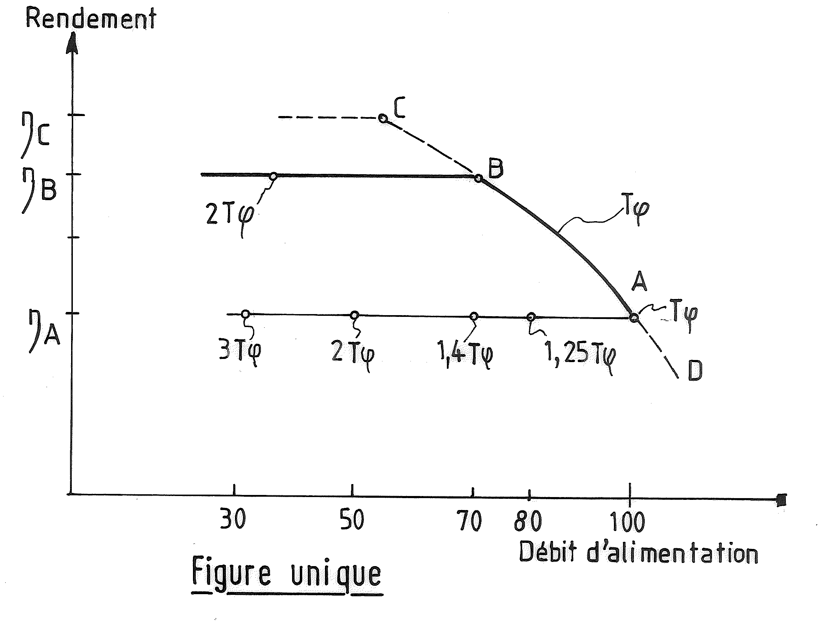

Le graphique de la Figure 1 illustre la différence entre la régulation standard et la régulation selon l'invention.

Le point de dimensionnement du PSA est le point A du graphique. Pour le débit nominal de gaz d'alimentation (100), on a optimisé l'unité PSA avec un temps de phase minimum $T\varphi$ - pour avoir le volume d'adsorbant minimum- et pour le rendement d'extraction requis ηA.

Il n'y a pas lieu ici de rentrer dans le détail de la détermination du temps de phase optimal qui peut être basée sur la durée minimale requise pour une étape (à cause de la cinétique d'adsorption, des pertes de charge...) ou sur une suite d'étapes devant tenir dans un temps de phase.

Le gaz d'élution provient donc d'une part d'une étape de dépressurisation à co-courant et d'autre part de la production. La régulation classique va permettre de maintenir le rendement nominal ηA en augmentant le temps de phase inversement proportionnellement à la réduction du débit d'alimentation. Ainsi à 80% du débit nominal, le temps de phase va correspondre à 1.25 $T\varphi$, à 50% à 2 $T\varphi$, à 33% à 3 $T\varphi$.

La nouvelle régulation selon l'invention, correspond au trait épais de la même Figure 1.

On profite du surdimensionnement du PSA par rapport au point de dimensionnement occasionné par la réduction de débit pour utiliser un cycle de productivité plus faible et de rendement plus élevé. Pour ce faire, on réduit la quantité de gaz d'élution provenant de la production. On se déplace sur la courbe AB du graphique à temps de phase constant $T\varphi$ avec un rendement augmentant jusqu'à atteindre ηB pour un débit de 70% du débit nominal. Dans l'exemple donné, en dessous de 70% du débit, on en revient à une régulation classique, c'est-à-dire qu'on va augmenter le temps de phase, mais cela va permettre de maintenir le rendement maximum ηB et non le rendement de dimensionnement, inférieur, ηA.

Suivant les conditions du dimensionnement, le point B peut correspondre au cas où la quantité de gaz d'élution provenant de la production a été annulée ou bien au cas où le débit total de gaz d'élution devient trop faible pour pouvoir assurer la pureté recherchée pour la production. En deçà, les performances chutent et n'offrent pas d'intérêt.

Il convient ici de faire un certain nombre de remarques.

Se placer sur la courbe AB est normalement l'optimum car on tire complètement partie du surdimensionnement qu'on transforme en rendement. Il est bien sûr possible d'utiliser un chemin intermédiaire entre les deux régulations décrites en n'utilisant qu'une fraction du surdimensionnement dans le but d'augmenter le rendement et d'ajuster en même temps la pureté de la production à la pureté visée via une augmentation du temps de phase.

Le gain potentiel sur le rendement va dépendre du point choisi pour le dimensionnement.

Pour un PSA H2, il peut être de plusieurs pourcents dans le cas d'un rendement nominal moyen - par exemple passer de 86 à 88 %- ou de quelques dixièmes de pourcent dans le cas d'un rendement de départ déjà très élevé, par exemple de 89.1 à 89.5. On peut cependant remarquer que dans le second cas, il s'agit généralement d'unité produisant de gros débits d'hydrogène, plus de 100 000 Nm3/h, et que la production supplémentaire se compte en centaines de Nm3/h.

Inversement, si l'on part d'un rendement assez faible, on peut atteindre des gains en rendement très appréciables (point C de la Figure 1) ;

Le point D est mis pour mémoire. On peut généralement traiter plus de gaz d'alimentation que le débit nominal au prix d'une perte en rendement. La régulation selon l'invention, en ajustant la quantité de gaz d'élution, peut permettre également de trouver une meilleure solution que la simple réduction du temps de phase.

On a choisi le débit de gaz d'alimentation, plus particulièrement une réduction du débit traité, comme paramètre opératoire permettant de dégager une marge sur le volume d'adsorbant comme exemple le plus direct. On conçoit que d'autres paramètres peuvent avoir le même effet comme une pression basse inférieure à la pression basse nominale, ce qui facilite la régénération. De même, on peut avoir un gaz d'alimentation plus pur, une pureté requise pour l'hydrogène moins élevée, des conditions de température ou de pression du gaz d'alimentation plus favorables...Dans ces cas, la correction liée à la pureté de l'hydrogène sera dans un premier temps généralement déterminante dans la régulation car la variation de ces paramètres opératoires (pressions, composition..) pourra ne pas être directement prise en compte dans la régulation. En pratique, une baisse de la pression de régénération par exemple, à débit d'alimentation inchangé, va conduire pour maintenir la pureté requise à traiter un peu plus de débit, c'est-à-dire à augmenter le temps de phase. Cette augmentation de temps de phase va alors permettre de diminuer l'élution par la production pour en revenir au temps de phase nominal et ce faisant augmenter le rendement d'extraction.

On notera qu'afin de ne pas perturber la production, il pourra être intéressant de soutirer la fraction ajustable de gaz d'élution prélevée sur ladite production de façon continue et avec un débit constant. Cette fraction doit donc être prélevée sur un (ou plusieurs) temps de phase entier.

Afin de mieux expliquer le principe de l'invention, on a pris le cas des PSA H2, procédé PSA qui a probablement connu le plus de développements ces dernières années du fait de son succès auprès de diverses industries consommatrices d'hydrogène.

On entend par là de l'hydrogène à une pureté supérieure à 95% mole, généralement supérieure à 98% mole et pouvant atteindre lorsque le procédé consommateur l'exige des puretés supérieure à 99.99%. .Mais l'invention dans son principe même peut s'appliquer à priori à la totalité des cycles PSA au sens le plus général dès lors qu'il y a une relation entre quantité de gaz d'élution, productivité et rendement.

Ainsi on peut envisager par exemple une unité PSA destinée à déballaster en CO2 un gaz de haut fourneaux à l'oxygène pour le recycler tout en produisant du CO2, à une pureté suffisante pour le séquestrer soit directement, soit après un traitement complémentaire (boîte froide, membrane, autre unité d'adsorption...).

Le cycle du PSA CO2 peut comprendre des étapes supplémentaires telles qu'une étape de Rinse qui consiste à faire circuler à co-courant dans le lit d'adsorbant une fraction de la production de CO2 à la pression de fin du dernier équilibrage afin de chasser de la zone d'entrée de l'adsorbant les constituants les plus légers (CO, CH4, H2, N2) pour récupérer ensuite lors du Blow down (dépressurisation à contre-courant) un effluent très enrichi en CO2. On notera que le CO2 peut être également extrait de l'adsorbeur pendant la phase d'élution - ou au moins pendant une partie de cette étape-suivante avec l'aide (éventuelle) d'une pompe à vide. On peut ainsi récupérer un gaz contenant plus de 80% mole de CO2. Le gaz récupéré en sortie lors de l'étape de Rinse est utilisé lors d'une étape de purge P pour repousser le CO2 vers l'extrémité d'entrée de l'adsorbeur. Le gaz récupéré en sortie de purge est évacué à l'extérieur de l'unité ou recyclé dans le gaz d'alimentation.

Plus simplement, il peut s'agir de déballaster en CO2 un gaz de haut fourneau classique (combustion à l'air) pour réinjecter le gaz appauvri en CO2 dans le haut fourneau.

Parmi d'autres applications des PSA susceptibles d'utiliser la régulation selon l'invention, on peut citer de façon non limitative la production ou épuration d'hélium, la production d'oxygène, la production ou le déballastage d'azote, la séparation d'hydrocarbures, le séchage de gaz...

Les applications de base envisagées pour des PSA selon l'invention sont préférentiellement des unités traitant de gros débit, par exemple plus de 100 000 Nm3/h, avec des adsorbants classiques et des vannes usuelles. Les phases -au sens de la définition donnée précédemment- seront de durée préférentiellement égale à 10 secondes et plus, conduisant à des cycles de durée généralement supérieure à la minute et préférentiellement d'au moins 2 minutes.

Néanmoins, les cycles selon l'invention sont également bien adaptés aux nouvelles structures adsorbantes en cours de développement.

Par nouvelles structures, on entend adsorbants structurés. L'adsorbant ne se présente plus sous forme de particules millimétriques (billes, bâtonnets, concassés, pastilles...) mais avec des géométries plus complexes et des tailles de plusieurs centimètres voire de plusieurs dizaines de centimètres. Il peut s'agir de monolithes, de contacteurs à passages parallèles, d'ensemble de fibres en parallèle, de tissu adsorbant... Les temps de cycle sont alors généralement beaucoup plus courts de l'ordre de quelques secondes ou dizaines de secondes.

**Revendications**

1. Procédé d'adsorption à modulation de pression (PSA) pour produire un flux gazeux enrichi en un composé X à partir d'un flux gazeux d'alimentation, mettant en œuvre au moins 2 adsorbeurs, chaque adsorbeur étant soumis à un cycle de pression présentant une pression haute et une pression basse et comprenant les étapes successives suivantes :

   a) adsorption à la pression haute du cycle avec production du flux gazeux enrichi en composé X
   b) dépressurisation jusqu'à la pression basse du cycle
   c) élution à la pression basse au moyen d'un gaz d'élution
   d) repressurisation jusqu'à la pression haute

   **caractérisé en ce que** :

   - le gaz d'élution comprend une fraction d'un flux gazeux issu de la dépressurisation d'un adsorbeur et une fraction du flux gazeux enrichi en composé X,
   - ladite fraction du flux gazeux enrichi en composé X est ajustable via des moyens de réglage, et
   - le cycle de pression présente un temps de phase correspondant à la durée d'un cycle de pression divisé par le nombre d'adsorbeurs et la fraction du flux gazeux enrichi en composé X est déterminée en fonction du temps de phase.

2. Procédé d'adsorption à modulation de pression (PSA) pour produire un flux gazeux enrichi en un composé X à partir d'un flux gazeux d'alimentation, mettant en œuvre au moins 2 adsorbeurs, chaque adsorbeur étant soumis à un cycle de pression présentant une pression haute et une pression basse et comprenant les étapes successives suivantes :

   a) adsorption à la pression haute du cycle avec production du flux gazeux enrichi en composé X
   b) dépressurisation jusqu'à la pression basse du cycle
   c) élution à la pression basse au moyen d'un gaz d'élution
   d) repressurisation jusqu'à la pression haute

   **caractérisé en ce que** :

   - le gaz d'élution comprend une fraction d'un flux gazeux issu de la dépressurisation d'un adsorbeur et une fraction du flux gazeux enrichi en composé X,
   - ladite fraction du flux gazeux enrichi en composé X est ajustable via des moyens de réglage, et
   - le cycle de pression présente un temps de phase correspondant à la durée du cycle de pression divisé par le nombre d'adsorbeurs et la fraction du flux gazeux enrichi en composé X est choisie de manière à ce que le temps de phase corresponde au temps de phase nominal $\pm$ 5%, le temps phase nominal correspondant au temps de phase du PSA dans les conditions de dimensionnement.

3. Procédé selon l'une des revendications 1 ou 2, **caractérisé en ce que** la fraction du flux gazeux enrichi en composé X est ajustée en fonction d'au moins une des conditions opératoires du PSA.

4. Procédé selon l'une des revendications 1 à 3, **caractérisé en ce que** les conditions opératoires comprennent le débit d'alimentation du PSA, la pression basse, la pression haute, la température du flux d'alimentation, la composition du flux gazeux d'alimentation et la concentration requise en composé X dans le flux gazeux enrichi.

5. Procédé selon l'une des revendications 1 à 4, **caractérisé en ce que** les moyens de réglage comprennent une vanne automatique.

6. Procédé selon la revendication 5, **caractérisé en ce que** la vanne automatique assure également une autre fonction dans le cycle PSA.

7. Procédé selon l'une des revendications 1 à 6, **caractérisé en ce que** le cycle de pression comprend de 1 à 6 équilibrages, de préférence de 2 à 5.

8. Procédé selon l'une des revendications 1 à 7, **caractérisé en ce que** l'étape b) de dépressurisation comprend plusieurs sous-étapes et le prélèvement de la fraction du flux gazeux issu de la dépressurisation est effectué simultanément ou au moins en partie avec une autre sous-étape.

9. Procédé selon l'une des revendications 1 à 8, **caractérisé en ce que** le prélèvement de la fraction du flux gazeux enrichi en composé X est effectuée pendant toute la durée d'un temps de phase.

10. Procédé selon l'une des revendications 1 à 9, **caractérisé en ce que** le composé X est de l'hydrogène ou du CO2.

**Patentansprüche**

1. Verfahren zur Druckwechsel-Adsorption (PSA) für die Erzeugung einer mit einer Verbindung X angereicherten Gasströmung ausgehend von einer Versorgungsgasströmung, das mindestens 2 Adsorber verwendet, wobei jeder Adsorber einem Druckzyklus unterzogen wird, der einen Hochdruck und einen Niederdruck aufweist, und das folgende aufeinanderfolgende Schritte umfasst:

   a) Adsorption bei Hochdruck des Zyklus mit Erzeugung der mit der Verbindung X angereicherten Gasströmung
   b) Druckminderung bis auf den Niederdruck des Zyklus
   c) Elution bei Niederdruck mittels eines Elutionsgases
   d) erneute Druckerhöhung bis auf den Hochdruck

   **dadurch gekennzeichnet, dass**:

   - das Elutionsgas eine Fraktion einer Gasströmung umfasst, die aus der Druckminderung eines Adsorbers stammt, und eine Fraktion der mit der Verbindung X angereicherten Gasströmung,
   - die Fraktion der mit der Verbindung X angereicherten Gasströmung über Einstellmittel angepasst werden kann, und
   - der Druckzyklus eine Phasenzeit aufweist, die der Dauer eines Druckzyklus geteilt durch die Anzahl von Adsorbern entspricht, und die Fraktion der mit der Verbindung X angereicherten Gasströmung in Abhängigkeit von der Phasenzeit bestimmt wird.

2. Verfahren zur Druckwechsel-Adsorption (PSA) für die Erzeugung einer mit einer Verbindung X angereicherten Gasströmung ausgehend von einer Versorgungsgasströmung, das mindestens 2 Adsorber verwendet, wobei jeder Adsorber einem Druckzyklus unterzogen wird, der einen Hochdruck und einen Niederdruck aufweist, und das folgende aufeinanderfolgende Schritte umfasst:

   a) Adsorption bei Hochdruck des Zyklus mit Erzeugung der mit der Verbindung X angereicherten Gasströmung
   b) Druckminderung bis auf den Niederdruck des Zyklus
   c) Elution bei Niederdruck mittels eines Elutionsgases
   d) erneute Druckerhöhung bis auf den Hochdruck

   **dadurch gekennzeichnet, dass**:

   - das Elutionsgas eine Fraktion einer Gasströmung umfasst, die aus der Druckminderung eines Adsorbers stammt, und eine Fraktion der mit der Verbindung X angereicherten Gasströmung,
   - die Fraktion der mit der Verbindung X angereicherten Gasströmung über Einstellmittel angepasst werden kann, und
   - der Druckzyklus eine Phasenzeit aufweist, die der Dauer des Druckzyklus geteilt durch die Anzahl von Adsorbern entspricht, und die Fraktion der mit der Verbindung X angereicherten Gasströmung so gewählt wird, dass die Phasenzeit der Sollphasenzeit $\pm$ 5 % entspricht, wobei die Sollphasenzeit der Phasenzeit der PSA unter den Bemessungsbedingungen entspricht.

3. Verfahren nach einem der Ansprüche 1 oder 2, **dadurch gekennzeichnet, dass** die Fraktion der mit der Verbindung X angereicherten Gasströmung in Abhängigkeit von mindestens einer der Betriebsbedingungen der PSA angepasst wird.

4. Verfahren nach einem der Ansprüche 1 bis 3, **dadurch gekennzeichnet, dass** die Betriebsbedingungen den Versorgungsdurchsatz der PSA, den Niederdruck, den Hochdruck, die Temperatur der Versorgungsströmung, die Zusammensetzung der Versorgungsgasströmung und die erforderliche Konzentration der Verbindung X in der angereicherten Gasströmung umfassen.

5. Verfahren nach einem der Ansprüche 1 bis 4, **dadurch gekennzeichnet, dass** die Einstellmittel ein automatisches Ventil umfassen.

6. Verfahren nach Anspruch 5, **dadurch gekennzeichnet, dass** das automatische Ventil ebenfalls eine weitere Funktion in dem PSA-Zyklus sichert.

7. Verfahren nach einem der Ansprüche 1 bis 6, **dadurch gekennzeichnet, dass** der Druckzyklus 1 bis 6 Ausgleiche umfasst, vorzugsweise 2 bis 5.

8. Verfahren nach einem der Ansprüche 1 bis 7, **dadurch gekennzeichnet, dass** Schritt b) zur Druckminderung mehrere Teilschritte umfasst und die Entnahme der Fraktion der Gasströmung, die aus der Druckminderung stammt, gleichzeitig oder mindestens teilweise mit einem weiteren Teilschritt ausgeführt wird.

9. Verfahren nach einem der Ansprüche 1 bis 8, **dadurch gekennzeichnet, dass** die Entnahme der Fraktion der mit der Verbindung X angereicherten Gasströmung während der gesamten Dauer einer Phasenzeit ausgeführt wird.

10. Verfahren nach einem der Ansprüche 1 bis 9, **dadurch gekennzeichnet, dass** die Verbindung X Wasserstoff oder $CO_2$ ist.

**Claims**

1. Pressure swing adsorption method (PSA) for producing a gaseous stream enriched with a compound X from a gaseous input stream, using at least two adsorbers, each adsorber being subjected to a pressure cycle having a high pressure and a low pressure and comprising the following consecutive steps:

   a) adsorption at the high pressure of the cycle with production of the gaseous stream enriched with the compound X
   b) depressurisation down to the low pressure of the cycle
   c) elution at the low pressure by means of an elution gas
   d) repressurisation up to the high pressure

   **characterised in that**:

   - the elution gas comprises a fraction of a gaseous stream from the depressurisation of an adsorber and a fraction of the gaseous stream enriched with the compound X,
   - said fraction of the gaseous stream enriched with the compound X can be adjusted using adjustment means, and
   - the pressure cycle has a phase time corresponding to the duration of a pressure cycle divided by the number of adsorbers and the fraction of the gaseous stream enriched with the compound X is determined in accordance with the phase.

2. Pressure swing adsorption method (PSA) for producing a gaseous stream enriched with a compound X from a gaseous supply stream, using at least two adsorbers, each adsorber being subjected to a pressure cycle having a high pressure and a low pressure and comprising the following consecutive steps:

   a) adsorption at the high pressure of the cycle with production of the gaseous stream enriched with the compound X
   b) depressurisation down to the low pressure of the cycle
   c) elution at the low pressure by means of an elution gas
   d) repressurisation up to the high pressure

   **characterised in that**:

   - the elution gas includes a fraction of a gaseous stream from the depressurisation of an adsorber and a fraction of the gaseous stream enriched with the compound X,

- said fraction of the gaseous stream enriched with the compound X can be adjusted using adjustment means, and
- the pressure cycle has a phase time corresponding to the duration of the pressure cycle divided by the number of adsorbers and the fraction of the gaseous stream enriched with the compound X is selected such that the phase time corresponds to the nominal phase time $\pm$ 5%, the nominal phase time corresponding to the phase time of the PSA under sizing conditions.

3. Method according to one of claims 1 or 2, **characterised in that** the fraction of the gaseous stream enriched with the compound is adjusted according to at least one of the operating conditions of the PSA.

4. Method according to one of claims 1 to 3, **characterised in that** the operating conditions comprise the supply flow of the PSA, the low pressure, the high pressure, the temperature of the supply stream, the composition of the gaseous supply stream and the concentration required of the compound X in the enriched gaseous stream.

5. Method according to one of claims 1 to 4, **characterised in that** the adjustment means comprise an automatic valve.

6. Method according to claim 5, **characterised in that** the automatic valve also ensures another function in the PSA cycle.

7. Method according to one of claims 1 to 6, **characterised in that** the pressure cycle comprises from 1 to 6 balances, preferably from 2 to 5.

8. Method according to one of claims 1 to 7, **characterised in that** the depressurisation step b) comprises a plurality of sub-steps and the removal of the fraction of the gaseous stream coming from the depressurisation is carried out simultaneously or at least partially with another sub-step.

9. Method according to one of claims 1 to 8, **characterised in that** the removal of the fraction of the gaseous stream enriched with the compound X is carried out for the whole duration of a phase time.

10. Method according to one of claims 1 to 9, **characterised in that** the compound X is hydrogen or CO2.

Figure unique

EP 3 052 218 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2892322 A1

**Littérature non-brevet citée dans la description**

- Parametric Study of a Pressure Swing Adsorption Process. *AIChE 1999, Annual Meeting,* 1999